(19) Europäisches Patentamt
European Patent Office
Office européen des brevets

(11) **EP 3 193 068 A1**

## (12) EUROPEAN PATENT APPLICATION
published in accordance with Art. 153(4) EPC

(43) Date of publication:
**19.07.2017 Bulletin 2017/29**

(21) Application number: **15840444.2**

(22) Date of filing: **20.08.2015**

(51) Int Cl.:
*F16L 59/02* (2006.01)   *B32B 5/28* (2006.01)
*B32B 7/02* (2006.01)

(86) International application number:
**PCT/JP2015/004170**

(87) International publication number:
**WO 2016/038806 (17.03.2016 Gazette 2016/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **11.09.2014 JP 2014185213**

(71) Applicant: **Nichias Corporation
Tokyo 104-8555 (JP)**

(72) Inventor: **KURIMOTO, Yoshiro
Tokyo 104-8555 (JP)**

(74) Representative: **Schmitz, Joseph
Isler & Pedrazzini AG
Giesshübelstrasse 45
Postfach 1772
8027 Zürich (CH)**

(54) **HEAT INSULATION MATERIAL AND METHOD FOR PRODUCING SAME**

(57)   A heat insulation material includes a laminate obtained by stacking fiber layers that include heat-resistant fibers, the fiber layers being bound with a thermosetting resin, wherein the laminate does not include a thermoplastic resin that has a heat-resistant temperature lower than that of the thermosetting resin, or includes only a small amount of a thermoplastic resin that has a heat-resistant temperature lower than that of the thermosetting resin.

FIG.3

**Description**

TECHNICAL FIELD

The invention relates to a heat insulation material and a method for producing the same.

BACKGROUND ART

A heat insulation material produced by binding a talcum powder and pulp using Portland cement, and the like are known as a heat insulation material that is cut before use so as to have a shape corresponding to the shape of a device or the like, and is required to exhibit high strength during use (e.g., a heat insulation material that is used for a hot press, a rubber vulcanizing machine, an injection molding machine, an induction furnace casing, or the like) (see Patent Literature 1).

However, since the above heat insulation material includes only pulp as reinforcing fibers, the above heat insulation material undergoes a significant decrease in mechanical strength and dimensional change due to heating. Moreover, since the above heat insulation material has insufficient toughness, cracks, breakage, and the like easily occur when a high load or an impact load is applied, although good cutting workability is obtained.

Therefore, a heat insulation material that exhibits excellent toughness, higher strength, and excellent thickness accuracy has been desired.

CITATION LIST

PATENT LITERATURE

Patent Literature 1: JP-A-S61-109205

SUMMARY OF INVENTION

In view of the above technology, the inventors proposed a heat insulation material that exhibits excellent workability, exhibits excellent heat resistance, excellent mechanical strength, and excellent toughness, and also exhibits excellent working accuracy and excellent thickness accuracy (Japanese Patent Application No. 2013-117843). An object of the invention is to provide a heat insulation material that exhibits further improved heat resistance and abrasion resistance, and a method for producing the same.

The inventors conducted extensive studies in order to solve the above technical problem. As a result, the inventors found that heat resistance and abrasion resistance can be improved by reducing the thermoplastic resin content in a heat insulation material. This finding has led to the completion of the invention.

Specifically, the invention provides the following heat insulation material and method for producing the same.

1. A heat insulation material including a laminate obtained by stacking fiber layers that include heat-resistant fibers, the fiber layers being bound with a thermosetting resin,
wherein the laminate does not include a thermoplastic resin that has a heat-resistant temperature lower than that of the thermosetting resin, or includes only a small amount of a thermoplastic resin that has a heat-resistant temperature lower than that of the thermosetting resin.

2. The heat insulation material according to 1, wherein the laminate includes a small amount of the thermoplastic resin, and the content of the thermoplastic resin in the laminate is 7 mass% or less.

3. A method for producing a heat insulation material including:

a prepreg production step that impregnates a sheet that includes heat-resistant fibers with a thermosetting resin to produce a prepreg, wherein the prepreg does not include a thermoplastic resin that has a heat-resistant temperature lower than that of the thermosetting resin, or includes only a small amount of a thermoplastic resin that has a heat-resistant temperature lower than that of the thermosetting resin;
a laminate production step that stacks a plurality of the prepregs to produce a laminate; and
a press step that presses the laminate at a temperature equal to or higher than the curing temperature of the thermosetting resin.

4. The method according to 3, wherein the prepreg includes a small amount of the thermoplastic resin, and the content of the thermoplastic resin in the prepreg is 7 mass% or less.

5. A heat insulation material comprising a laminate obtained by stacking fiber layers that comprise heat-resistant fibers, the fiber layers being bound with a thermosetting resin,

wherein the laminate does not comprise a thermoplastic resin, or comprises only a small amount of a thermoplastic resin,

the thermosetting resin is one or more thermosetting resins selected from thermosetting phenol resins, epoxy resins, melamine resins, urea resins, unsaturated polyester resins, alkyd resins, polyurethane resins, thermosetting polyimide resins, and silicone resins, and

the thermoplastic resin is one or more thermoplastic resins selected from acrylic resins, polyvinyl alcohol, polyvinyl chloride, polystyrene, polyethylene, polypropylene, PET resins, and PBT resins.

The invention thus provides a heat insulation material that exhibits excellent heat resistance and excellent abrasion resistance, and a method for producing the same.

BRIEF DESCRIPTION OF DRAWINGS

FIG. 1 is a schematic view illustrating a production example of a prepreg that is used to produce the heat insulation material according to the invention.

FIG. 2 is a schematic view illustrating a production example in which the heat insulation material according to the invention is produced using a prepreg.

FIG. 3 is a view illustrating a difference in abrasion resistance due to a difference in thermoplastic resin content (Experimental Example 1).

FIG. 4 is a view illustrating a change in thickness during heating due to a difference in thermoplastic resin content (Experimental Example 1).

FIG. 5 is a view illustrating a change in weight during heating due to a difference in thermoplastic resin content (Experimental Example 1).

DESCRIPTION OF EMBODIMENTS

The heat insulation material according to the invention includes a sack of fiber layers that include heat-resistant fibers, the fiber layers being bound with a thermosetting resin. The fiber layers included in the heat insulation material according to the invention do not include a thermoplastic resin that has a heat-resistant temperature lower than that of the thermosetting resin, or include only a small amount of a thermoplastic resin that has a heat-resistant temperature lower than that of the thermosetting resin. When the fiber layers include the thermoplastic resin, the content of the thermoplastic resin is preferably 7 mass% or less, more preferably 5 mass% or less, and still more preferably 3 mass% or less.

The term "heat-resistant temperature" used herein in connection with a resin refers to the upper-limit temperature up to which the physical properties of the resin are maintained (e.g., a temperature at which a resin material is softened and deformed, or a temperature at which a resin material is thermally decomposed). Specifically, the term "heat-resistant temperature" used herein refers to a softening temperature, a glass transition temperature, or the like from the viewpoint of physical heat resistance, and refers to a temperature at which a weight loss due to heating or the like occurs from the viewpoint of chemical heat resistance. More specifically, the heat-resistant temperature differs between the thermoplastic resin and the thermosetting resin. The heat-resistant temperature of the thermoplastic resin is a softening temperature at which the thermoplastic resin is softened under specific heating conditions (heating time and heating rate), or a thermal decomposition temperature at which the bonds between the components break, and the resin changes in properties or deteriorates (specifically, a specific (5% or 10%) weight reduction temperature, a deflection temperature under load, a specific (e.g., 2%) thickness change temperature, or a temperature based on determination of the outward appearance (shape (swelling, cracking, and bending) and color) of the resin material). The heat-resistant temperature of the thermosetting resin is a curing temperature at which the thermosetting resin is cured under the specific heating conditions, or a thermal decomposition temperature at which the bonds between the components break, and the resin changes in properties or deteriorates (specifically, a specific (5% or 10%) weight reduction temperature, a deflection temperature under load, a specific (e.g., 2%) thickness change temperature, or a temperature based on determination of the outward appearance (shape (swelling, cracking, and bending) and color) of the resin material). In particular, the heat-resistant temperature of the thermoplastic resin and the thermosetting resin refers to a temperature at which the weight loss becomes 10% or less when the resin is heated for a specific time.

The invention implements an improvement in heat resistance, abrasion resistance, and strength (flexural strength) by employing a configuration in which the heat insulation material does not include the thermoplastic resin, or includes only a small amount of the thermoplastic resin.

For example, when the fiber layers included in the heat insulation material include a specific amount of a thermoplastic resin that has a heat-resistant temperature lower than that of the thermosetting resin as a sizing agent, a binder, or the like, creep (deformation of material) easily occurs at a high temperature due to the plasticity of the thermoplastic resin, and a decrease in structural strength occurs due to creep fatigue.

For example, when the heat insulation material is used as a heat insulation plate of a mold assembly, a gap is formed between the heat insulation plate and the attachment structure of the mold assembly when the heat insulation plate has deformed due to heating and pressurization during pressing, and the pressure state of the mold assembly becomes unstable.

When the thermoplastic resin has been thermally decomposed due to a high temperature, decomposition proceeds further due to the heat of decomposition. When the thermoplastic resin has increasingly disappeared due to thermal decomposition, the fiber layer exhibits decreased adhesion (i.e., the fiber layer is easily disentangled), whereby a decrease in heat resistance and abrasion resistance, and a further decrease in strength, occur.

The invention can reduce or suppress a situation in which the thermoplastic resin decreases the heat resistance, the abrasion resistance, and the strength (flexural strength) of the heat insulation material, by employing a configuration in which the heat insulation material does not include the thermoplastic resin, or includes only a small amount of the thermoplastic resin. In other words, the invention can improve the heat resistance, the abrasion resistance, and the strength (flexural strength) of the heat insulation material by employing a configuration in which the heat insulation material does not include the thermoplastic resin, or includes only a small amount of the thermoplastic resin.

Either or both of inorganic fibers and organic fibers that exhibit heat resistance may be used as the heat-resistant fibers. The inorganic fibers may be one or more types of inorganic fibers selected from glass fibers, silica fibers, alumina fibers, mullite fibers, silicon carbide fibers, rock wool, and the like. The organic fibers may be one or more types of organic fibers selected from aramid fibers, polyester fibers, polyethylene fibers, acrylic fibers, rayon fibers, carbon fibers, and the like.

The thermosetting resin may be one or more thermosetting resins selected from a thermosetting phenol resin, an epoxy resin, a melamine resin,
a urea resin, an unsaturated polyester resin, an alkyd resin, a polyurethane resin, a thermosetting polyimide resin, a silicone resin, and the like.

The thermoplastic resin may be one or more thermoplastic resins selected from an acrylic resin, polyvinyl alcohol, polyvinyl chloride, polystyrene, polyethylene, polypropylene, a polyethylene terephthalate (PET) resin, and a polybutylene terephthalate (PBT) resin, and the like. These thermoplastic resins have a heat-resistant temperature lower than that of the above thermosetting resins.

In view of the thermoplastic resin and the thermosetting resin described above, the heat insulation material according to the invention may include
a laminate obtained by stacking fiber layers that include heat-resistant fibers, the fiber layers being bound with a thermosetting resin, wherein the laminate does not include a thermoplastic resin, or includes only a small amount of a thermoplastic resin, the thermosetting resin is one or more thermosetting resins selected from a thermosetting phenol resin, an epoxy resin, a melamine resin, a urea resin, an unsaturated polyester resin, an alkyd resin, a polyurethane resin, a thermosetting polyimide resin, and a silicone resin, and the thermoplastic resin is one or more thermoplastic resins selected from an acrylic resin, polyvinyl alcohol, polyvinyl chloride, polystyrene, polyethylene, polypropylene, a PET resin, and a PBT resin.

The ratio of the fibers and the thermosetting resin with respect to the heat insulation material may be 93 mass% or more, 95 mass% or more, 97 mass% or more, or 99 mass% or more, for example.

The heat insulation material according to the invention may include
a curing agent, a curing accelerator, an inorganic filler, a catalyst, and the like in addition to the fibers and the thermosetting resin.

Examples of the curing agent (excluding a thermosetting resin and
a thermoplastic resin) include an amine such as hexamethylenetetramine,
a peroxide such as an organic peroxide, and the like.

The curing accelerator may be one or more curing accelerators selected from a phosphorus-based compound, a tertiary amine, imidazole, an organic acid metal salt, a Lewis acid, an amine complex salt, and the like.

The inorganic filler may be one or more inorganic fillers selected from silica, calcium carbonate, and the like. When the heat insulation material includes the inorganic filler, the heat insulation material can be reinforced, and the density, the thermal conductivity, and the creep properties can be easily controlled within the desired ranges. For example, the heat insulation material may preferably include the inorganic filler in an amount of 0 to 32 mass%, more preferably 5 to 20 mass%, and still more preferably 7 to 15 mass%.

The content of the heat-resistant fibers and the content of the thermosetting resin in the heat insulation material are not particularly limited. For example, the heat insulation material may include the heat-resistant fibers in an amount of 10 to 90 mass%, 20 to 80 mass%, or 30 to 70 mass%. The heat insulation material may include the thermosetting resin in an amount of 10 to 90 mass%, 20 to 80 mass%, or 30 to 70 mass%.

The heat insulation material according to the invention may be a laminate that includes a fiber layer and a non-fiber layer (e.g., metal-containing layer). It is preferable that the heat insulation material according to the invention is a laminate in which only fiber layers are stacked (i.e., a laminate that does not include a non-fiber layer). The non-fiber layer may be a layer that includes a material (e.g., reinforcing material, refractory material, or water-proof material) for protecting the heat insulation material (laminate), for example. The heat insulation material according to the invention may be produced without using a decorative sheet paper (e.g., titanium paper) that provides a good outward appearance. The fiber layers and the non-fiber layers included in the laminate may be identical or alsmost identical to or differ from each other as to the thickness.

The heat insulation material according to the invention may be produced by impregnating a heat-resistant sheet (fiber sheet) with a thermosetting resin to produce a prepreg, stacking a plurality of the prepregs to produce a laminate, and pressing the laminate at a temperature equal to or higher than the curing temperature of the thermosetting resin. The thermoplastic resin may be included in the sheet, or the heat-resistant sheet (fiber sheet) may be impregnated with the thermosetting resin and the thermoplastic resin.

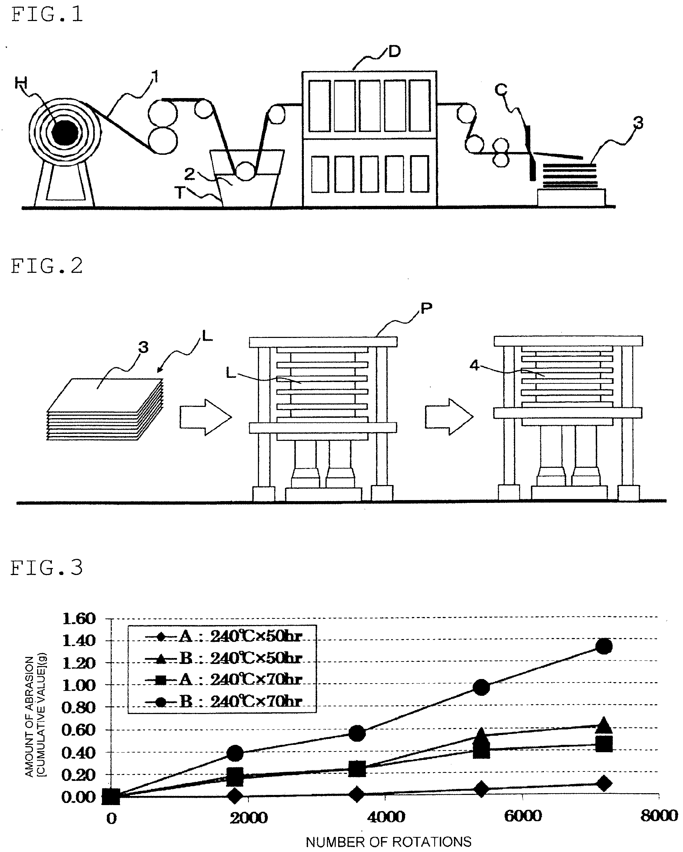

FIG. 1 is a schematic view illustrating a production example of the prepreg that is used to produce the heat insulation material according to the invention.

In the example illustrated in FIG. 1, a heat-resistant sheet 1 is drawn from a holder H that holds the heat-resistant sheet 1 in a wound state using a roller or the like, immersed in a thermosetting resin 2 that is held in an impregnation tank T to be impregnated with a specific amount of thermosetting resin 2, dried using a drier D, and cut using a cutter C so as to have a specific size to produce the desired prepreg 3.

Examples of the heat-resistant sheet 1 used in connection with the invention include a cloth, paper, a mat, and the like. The cloth may be produced by weaving glass fibers.

The paper may be produced using a papermaking machine. Inorganic paper may be produced by appropriately adding a small amount of organic binder to bulk inorganic fibers, and subjecting the inorganic fibers to a papermaking process using a papermaking machine. Either or both of a thermoplastic resin (e.g., acrylic resin or polyvinyl alcohol) and a thermosetting resin may be used as the organic binder. It is preferable to use a thermosetting resin as the organic binder.

The content of the inorganic fibers in the inorganic paper is preferably 45 to 100 mass%, more preferably 74 to 94 mass%, and still more preferably 82 to 88 mass%. The content of the organic binder in the inorganic paper is preferably 0 to 55 mass%, more preferably 6 to 26 mass%, and still more preferably 12 to 18 mass%.

The average thickness of the paper is normally 0.2 to 6 mm. The term "average thickness" used herein refers to the arithmetic average value of thicknesses measured at eight points using calipers or a micrometer.

The basis weight of the paper is normally 20 to 430 $g/m^2$. The term "basis weight ($g/m^2$)" used herein refers to a value calculated in accordance with JIS P 8124.

The mat is produced by entangling fibers. For example, the mat may be produced by entangling bulk fibers using a needle punching machine, and forming the interlaced fibers in the shape of a mat. For example, the mat may be formed of only inorganic fibers (i.e., may have an inorganic fiber content of 100 mass%), and may not include a thermoplastic resin that is used as a sizing agent or the like. The inorganic fibers may be glass fibers, for example.

Since the mat has an irregular surface, the mats are interwined with each other with an improved strength when stacked. Since the mat can be produced without using a binder, it is possible to reduce cost.

The average thickness of the mat is 2 to 20 mm, for example. The basis weight of the mat is 100 to 4,000 $g/m^2$, for example.

The heat-resistant sheet 1 may be impregnated with the thermosetting resin, the curing agent, and the curing accelerator. The heat-resistant sheet 1 may be impregnated with the thermosetting resin and the inorganic filler.

When the heat-resistant sheet 1 is paper, the basis weight of the prepreg produced using the paper may be 30 to 690 $g/m^2$, for example.

When the heat-resistant sheet 1 is a mat, the basis weight of the prepreg produced using the mat may be 150 to 10,000 $g/m^2$, for example.

The term "basis weight ($g/m^2$)" used herein in connection with a prepreg refers to a value calculated from the mass (g) of a $100 \times 100$ cm square prepreg.

FIG. 2 is a schematic view illustrating a production example in which the heat insulation material according to the invention is produced using a prepreg.

In the example illustrated in FIG. 2, the desired number of prepregs 3 produced by impregnating the heat-resistant sheet with the thermosetting resin are stacked to obtain five laminates L. The resulting five laminates L are stacked between the press plates of a press P in a state in which a spacer is provided between the laminates L, and hot-pressed at a temperature equal to or higher than the thermal curing temperature of the thermosetting resin that forms the prepreg such that each prepreg has a desired average thickness to obtain the desired heat insulation material 4.

Although FIG. 2 illustrates an example in which the hot-pressing process is performed in a state in which five laminates L are stacked, the hot-pressing process may normally be performed in a state in which about 1 to 20 laminates L are stacked.

The number of prepregs to be stacked and subjected to the hot-pressing process is not particularly limited. When the sheet is paper, the number of prepregs to be stacked is 3 to 200 per 10 mm thickness, for example. When the sheet is a mat, the number of prepregs to be stacked is 1 to 20 per 10 mm thickness, for example.

The compression ratio of the prepreg before and after the hot-pressing process is 15 to 50%, 15 to 33%, or 21 to 29%, for example. The compression ratio of the prepreg is calculated using the following expression.

$$\text{Compression ratio (\%) = (average thickness (mm) of prepreg after hot-pressing process / average thickness (mm) of prepreg before being subjected to hot-pressing process)} \times 100$$

The temperature of the hot-pressing process is set to be equal to or higher than the thermal curing temperature of the thermosetting resin included in the prepreg. For example, the temperature is preferably set to 100 to 200°C, more preferably 130 to 180°C, and still more preferably 145 to 155°C.

The pressing time of the hot-pressing process is not particularly limited as long as the thermosetting resin included in the prepreg is thermally cured. For example, the pressing time is preferably 30 minutes or more, more preferably 60 minutes or more, and still more preferably 120 minutes or more.

The hot-pressed product obtained by the hot-pressing process may optionally be machined, and may optionally be further cured by heating the hot-pressed product to a specific temperature.

Since the heat insulation material obtained using the above method has a structure in which a plurality of prepregs that include the heat-resistant sheet as a base have been hot-pressed in a stacked state, it is considered that the prepregs in which the thermosetting resin is uniformly dispersed have been hot-pressed in a state in which the occurrence of uneven heating (i.e., a variation in heating temperature) is suppressed during the hot-pressing process.

Therefore, it is considered that the heat insulation material exhibits highly accurate workability, and exhibits excellent flexural strength, excellent toughness, excellent thickness accuracy, and the like as compared with a heat insulation material that includes the same amounts of fibers and a thermosetting resin.

The density of the heat insulation material according to the invention is not particularly limited. For example, the density of the heat insulation material is preferably 400 to 2,000 $kg/m^3$, more preferably 900 to 1,250 $kg/m^3$, and still more preferably 1,000 to 1,100 $kg/m^3$.

The term "density" used herein in connection with the heat insulation material refers to a value calculated from the dimensions ($m^3$) and the weight (kg) of a specimen prepared by cutting the heat insulation material so as to have a length of 120 mm and a width of 40 mm. The thickness of the specimen is the same as that of the heat insulation material.

It is preferable that the heat insulation material according to the invention have a heat resistance such that the heat insulation material does not produce cracks and breakage when heated at 200°C for 24 hours in air. It is more preferable that the heat insulation material according to the invention have a heat resistance such that the heat insulation material does not produce cracks and breakage when heated at 260°C for 24 hours in air.

It is preferable that the heat insulation material according to the invention have a thermal conductivity of 0.25 W/(m·K) or less, more preferably 0.18 W/(m·K) or less, and still more preferably 0.12 W/(m·K) or less.

The term "thermal conductivity" used herein in connection with the heat insulation material refers to a value measured in accordance with JIS A 1412-2:1999 (Test method for thermal resistance and related properties of thermal insulations - Part 2: Heat flow meter apparatus).

It is preferable that the heat insulation material according to the invention have a flexural strength of 30 MPa or more, more preferably 45 MPa or more, and still more preferably 55 MPa or more.

The term "flexural strength" used herein in connection with the heat insulation material refers to a value measured in accordance with the fiber-reinforced resin flexural test specified in JIS C 2210-1975.

It is preferable that the heat insulation material according to the invention have a Charpy impact value measured in accordance with JIS K 6911 of 10 $kJ/m^2$ or more, more preferably 15 $kJ/m^2$ or more, and still more preferably 18 $kJ/m^2$ or more.

When the Charpy impact value is within the above range, the heat insulation material exhibits sufficient toughness.

It is preferable that the heat insulation material according to the invention have a thickness accuracy that the difference in thickness when the thickness of the heat insulation material is measured at an arbitrary eight points using calipers, is within $\pm 5$ mm, more preferably within $\pm 3$ mm, and still more preferably within $\pm 2.5$ mm.

EXAMPLES

The invention is further described below by way of examples. The following examples are for illustration purposes only, and the invention is not limited to the following examples.

Example 1

(1) Production of prepreg

The apparatus illustrated in FIG. 1 was used. A heat-resistant mat 1 (average thickness: 6 mm, average width: 1,050 mm, average length: 30 mm, density: 120 kg/m$^3$) that was wound around the holder H was drawn using a roller, and immersed in a resol-type phenol resin (thermal curing temperature: 150°C) (thermosetting resin 2) that was held in the impregnation tank T. The heat-resistant mat 1 was obtained by entangling glass fibers using a needle punching machine. The heat-resistant mat 1 was dried at 60 to 130°C using the drier D, and cut using the cutter C to produce a plurality of sheet-like (plate-like) prepregs 3 including fibers derived from the glass fiber mat (40 mass%) and the resol-type phenol resin (60 mass%).

(2) Production of heat insulation material

Five laminates L in which thirteen prepregs 3 obtained in the above (1) were stacked, were produced. As illustrated in FIG. 2, the five laminates L were stacked between the press plates of the press P in a state in which a spacer was provided between the laminates L, and hot-pressed at 150°C for 2 hours (or at 200°C for 1 hour) to obtain a sheet-like or plate-like heat insulation material 4 (length: 2,000 mm, width: 1,000 mm, thickness: 22 mm, for example). The heat insulation material 4 had a structure in which the glass fibers included in the mat were bound with the thermosetting resin, and did not include a thermoplastic resin.
The heat insulation material 4 included 40 mass% of the fibers and 60 mass% of the resol-type phenol resin, had a density of 1,050 kg/m$^3$, had a heat resistance that the heat insulation material did not produce cracks and breakage when heated at 200°C for 24 hours in air, had a thermal conductivity of 0.12 W/(m·K), had a flexural strength of 60 MPa, had a Charpy impact value measured in accordance with JIS K 6911 of 20 kJ/m$^2$, had a thickness accuracy that the difference in thickness when the thickness of the heat insulation material was measured at an arbitrary eight points using calipers, was 2 mm or less, and exhibited excellent workability and excellent working accuracy, i.e., the heat insulation material 4 could be easily cut without producing cracks, breakage, and the like.

Experimental Example 1

It was demonstrated by Experimental Example 1 that the heat insulation material according to the invention exhibits excellent abrasion resistance and excellent heat resistance due to a low thermoplastic resin content.

(1) Production of heat insulation material B

A plurality of prepregs (average thickness: 0.84 mm, length: 2,110 mm, width: 1,050 mm) were produced in the same manner as in Example 1, except that glass fiber paper (average thickness: 0.78 mm, basis weight: 110 g/m$^2$) including a POVAL-based synthetic resin (thermoplastic resin, heat-resistant temperature: less than 150°C) and an acrylic-based synthetic resin (thermoplastic resin, heat-resistant temperature: less than 150°C) in an amount of 16 mass% was used instead of the heat-resistant mat 1. A heat insulation material B (length: 2,070 mm, width: 1,020 mm, thickness: 12 mm) was obtained in the same manner as in Example 1, except that fifty-seven prepregs were stacked to produce the laminate L.
The heat insulation material B included the fibers (42 mass%), the resol-type phenol resin (50 mass%), and the thermoplastic resin (8 mass%).

(2) Measurement of heat-resistant temperature

The heat-resistant temperature of the resin used to produce the heat insulation material was measured as described below. The resin material was heated for a specific heating time using a general-purpose heating device (e.g., oven) and a general-purpose gravimetric instrument. A temperature at which a 10% weight loss occurred was taken as the heat-resistant temperature. It is also possible to measure the heat-resistant temperature using a thermogravimeter (TG).

(3) Evaluation of abrasion resistance

The heat insulation material obtained in Example 1 is hereinafter referred to as "heat insulation material A".

The heat insulation materials A and B were heated at 240°C for 50 hours or 70 hours. After cooling the heat insulation material to room temperature, the amount of abrasion was measured. More specifically, the heat insulation material was brought into contact with the abrasive wheel of a Taber abrasion tester, and rotated with respect to the abrasive wheel. A heat insulation material was removed in an area in which the heat insulation material was brought into contact with the abrasive wheel. The amount (g) of abrasion was calculated from a change in the weight of the heat insulation material during the test. The results are illustrated in FIG. 3.

(4) Evaluation of heat resistance

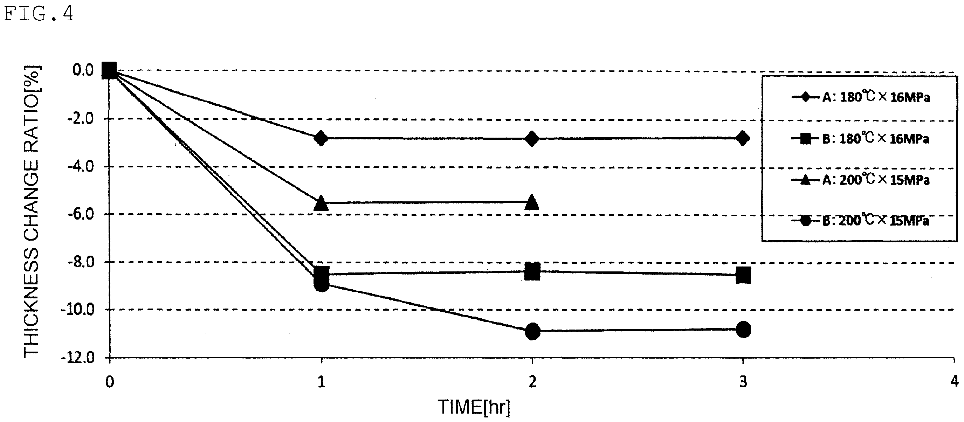

The heat insulation materials A and B were placed in an oven, and heated at 180°C under a pressure of 16 MPa, or heated at 200°C under a pressure of 15 MPa, and a change in thickness was measured. The results are illustrated in FIG. 4.

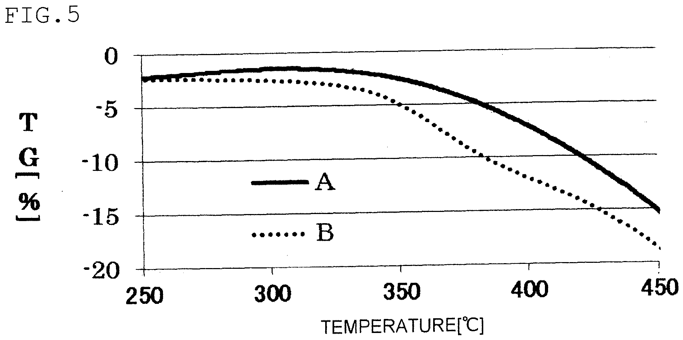

The heat insulation materials A and B were heated to 450°C to measure the weight loss (%). The results are illustrated in FIG. 5.

As illustrated in FIGS. 3 to 5, when the thermoplastic resin content in the heat insulation material was 8 mass% or more, the abrasion resistance and the heat resistance (weight loss and change in thickness) of the heat insulation material significantly decreased. Therefore, it is preferable that the thermoplastic resin content in the heat insulation material be 7 mass% or less.

INDUSTRIAL APPLICABILITY

The heat insulation material according to the invention may be used as a heat insulation material for a hot press, a rubber vulcanizing machine, and an injection molding machine, an induction furnace casing, and the like.

Although only some exemplary embodiments and/or examples of the invention have been described in detail above, those skilled in the art will readily appreciate that many modifications are possible in the exemplary embodiments and/or examples without materially departing from the novel teachings and advantages of the invention. Accordingly, all such modifications are intended to be included within the scope of the invention.

The documents described in the specification, and the specification of the Japanese patent application which the present application claims priority under the Paris Convention based on, are incorporated herein by reference in their entirety.

**Claims**

1. A heat insulation material comprising a laminate obtained by stacking fiber layers that comprise heat-resistant fibers, the fiber layers being bound with a thermosetting resin,
   wherein the laminate does not comprise a thermoplastic resin that has a heat-resistant temperature lower than that of the thermosetting resin, or comprises only a small amount of a thermoplastic resin that has a heat-resistant temperature lower than that of the thermosetting resin.

2. The heat insulation material according to claim 1, wherein the laminate comprises a small amount of the thermoplastic resin, and the content of the thermoplastic resin in the laminate is 7 mass% or less.

3. A method for producing a heat insulation material comprising:

   a prepreg production step that impregnates a sheet that comprises heat-resistant fibers with a thermosetting resin to produce a prepreg, wherein the prepreg does not comprise a thermoplastic resin that has a heat-resistant temperature lower than that of the thermosetting resin, or comprises only a small amount of a thermoplastic resin that has a heat-resistant temperature lower than that of the thermosetting resin;
   a laminate production step that stacks a plurality of the prepregs to produce a laminate; and
   a press step that presses the laminate at a temperature equal to or higher than a curing temperature of the thermosetting resin.

4. The method according to claim 3, wherein the prepreg comprises a small amount of the thermoplastic resin, and the content of the thermoplastic resin in the prepreg is 7 mass% or less.

5. A heat insulation material comprising a laminate obtained by stacking fiber layers that comprise heat-resistant fibers, the fiber layers being bound with a thermosetting resin,
wherein the laminate does not comprise a thermoplastic resin, or comprises only a small amount of a thermoplastic resin,
the thermosetting resin is one or more thermosetting resins selected from thermosetting phenol resins, epoxy resins, melamine resins, urea resins, unsaturated polyester resins, alkyd resins, polyurethane resins, thermosetting polyimide resins, and silicone resins, and
the thermoplastic resin is one or more thermoplastic resins selected from acrylic resins, polyvinyl alcohol, polyvinyl chloride, polystyrene, polyethylene, polypropylene, PET resins, and PBT resins.

FIG.1

FIG.2

FIG.3

FIG.4

EP 3 193 068 A1

FIG.5

EP 3 193 068 A1

## INTERNATIONAL SEARCH REPORT

International application No.

PCT/JP2015/004170

### A. CLASSIFICATION OF SUBJECT MATTER
*F16L59/02*(2006.01)i, *B32B5/28*(2006.01)i, *B32B7/02*(2006.01)i

According to International Patent Classification (IPC) or to both national classification and IPC

### B. FIELDS SEARCHED

Minimum documentation searched (classification system followed by classification symbols)
F16L59/02, B32B5/28, B32B7/02

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-171030 A  (Tokiwa Electric Co., Ltd.),<br>26 June 2001 (26.06.2001),<br>paragraphs [0050] to [0066]; fig. 1 to 2<br>(Family: none) | 1-2,5<br>4 |
| Y | JP 2006-17169 A  (Asahi Fiber Glass Co., Ltd.),<br>19 January 2006 (19.01.2006),<br>paragraphs [0010] to [0026]; fig. 1<br>(Family: none) | 3-4 |
| Y | JP 6-190962 A  (Mitsubishi Kasei Corp.),<br>12 July 1994 (12.07.1994),<br>paragraph [0013]<br>(Family: none) | 3-4 |

| ☒ | Further documents are listed in the continuation of Box C. | | ☐ | See patent family annex. |

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    25 September 2015 (25.09.15) | Date of mailing of the international search report<br>    06 October 2015 (06.10.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

13

**EP 3 193 068 A1**

## INTERNATIONAL SEARCH REPORT

| | International application No. |
|---|---|
| | PCT/JP2015/004170 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-32532 A  (Mitsubishi Chemical Corp.), 03 February 1995 (03.02.1995), paragraph [0022] (Family: none) | 3-4 |
| A | JP 2000-1599 A  (Kashima Oil Co., Ltd.), 07 January 2000 (07.01.2000), paragraphs [0204] to [0218] (Family: none) | 1-5 |
| A | JP 60-18345 A  (Nitto Electric Industrial Co., Ltd.), 30 January 1985 (30.01.1985), page 2, upper right column, line 12 to lower right column, line 14; page 4, upper right column, line 10 to lower left column, line 12; fig. 1 (Family: none) | 1-5 |

Form PCT/ISA/210 (continuation of second sheet) (July 2009)

**14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61109205 A
- JP 2013117843 A